# EUROPÄISCHE PATENTSCHRIFT

(11) **EP 3 670 245 B1**
(45) Veröffentlichungstag und Bekanntmachung des Hinweises auf die Patenterteilung: **24.07.2024**
(21) Anmeldenummer: 19205009.4
(22) Anmeldetag: 24.10.2019
(51) Int. Cl.: B60L 53/14

(54) **SCHUTZVORRICHTUNG FÜR EIN LADEKABEL**
PROTECTION DEVICE FOR A CHARGING CABLE
DISPOSITIF DE PROTECTION POUR UN CÂBLE DE CHARGE

(30) Priorität: 20.12.2018 DE 102018222470
(43) Veröffentlichungstag der Anmeldung: 24.06.2020
(73) Patentinhaber: Audi AG, 85045 Ingolstadt (DE)
(72) Erfinder: Vahle, Sebastian, 84034 Landshut (DE)

(56) Entgegenhaltungen:
- DE-A1- 102011 011 461
- GB-A- 2 503 229

## Beschreibung

Die Erfindung betrifft ein System zum Schützen eines Ladekabels und ein Verfahren zum Schützen eines Ladekabels.

Ein Ladekabel zum Versorgen eines elektrisch angetriebenen Fahrzeugs ist im angesteckten Zustand, wenn das Ladekabel an einer Ladestation angeschlossen ist, der Witterung, z. B. Schnee und Regen, ausgesetzt und kann daher stark verschmutzen. Wenn es sich um ein fahrzeugeigenes Ladekabel handelt, muss es im verschmutzten Zustand im Innenraum des Fahrzeugs verstaut werden. Außerdem besteht kein Schutz gegen Beschädigung des Ladekabels.

Die Druckschrift DE 20 2012 009 032 U1 beschreibt eine fest integrierte Ladestation mit einem Ladekabel für ein Elektrogerät.

Die Druckschrift DE 10 2009 052 366 A1 beschreibt ein Fahrzeug mit einem elektromotorischen Antrieb.

Eine Ladekabelverriegelungseinrichtung für ein Fahrzeug ist aus der Druckschrift DE 10 2011 011 461 A1 bekannt. Diese umfasst eine fahrzeugseitige Ladebuchse zur Aufnahme eines mit einer externen Stromversorgungseinheit verbindbaren Ladekabels und eine an der Ladebuchse angeordneten Verriegelungsvorrichtung, wobei die Verriegelungsvorrichtung zum Verriegeln und Freigeben des Ladekabels gebildet ist. Hierbei ist das Ladekabel mit mindestens einer Schutzummantelung versehen, in welche zumindest eine druck- und/oder zugsensitive Erfassungseinheit integriert ist und/oder welche mindestens eine weitere Verriegelungsvorrichtung aufweist. Dabei ist die Schutzummantelung derart im oder am Fahrzeug angeordnet, dass dieselbe vorzugsweise ausziehbar ist, so dass die Länge der Schutzummantelung der Länge des Ladekabels entspricht.

Die Druckschrift GB 2 503 229 A beschreibt ein Verfahren zum elektrischen Laden eines Fahrzeugs an einer elektrischen Energiequelle, die eine Stützkonstruktion mit einer vertikalen Stütze und einer horizontalen Stütze aufweist, die miteinander orthogonal verbunden sind und ein Ladekabel, das das Fahrzeug mit der Energiequelle verbindet, brückenartig stützen und führen.

Vor diesem Hintergrund war es eine Aufgabe, ein Ladekabel für ein Fahrzeug vor Umwelteinflüssen zu schützen.

Diese Aufgabe wird durch ein System und ein Verfahren mit den Merkmalen der unabhängigen Patentansprüche gelöst. Ausführungsformen des Systems und des Verfahrens gehen aus den abhängigen Patentansprüchen hervor.

Das erfindungsgemäße System weist eine Ausführungsform einer Schutzvorrichtung und eine Aufnahmeeinrichtung zur Aufnahme bzw. Unterbringung dieser Schutzvorrichtung auf.

Die Schutzvorrichtung ist für ein elektrisches Ladekabel vorgesehen, das dazu ausgebildet ist, zum Durchführen eines elektrischen Ladevorgangs eine erste Einrichtung mit einer zweiten Einrichtung elektrisch zu verbinden und zwischen den Einrichtungen elektrische Energie zu transportieren. Die Schutzvorrichtung weist ein Stützgerüst und einen Mantel auf, die dazu ausgebildet sind, einen Hohlraum für das Ladekabel in einer Längsrichtung schlauchförmig zu umhüllen, bspw. zu umschließen. Dabei erstreckt sich der von dem Stützgerüst und dem Mantel zu umhüllende bzw. umhüllte Hohlraum in der Längsrichtung, wobei das Ladekabel durch den Hohlraum führbar bzw. führen ist. Die Schutzvorrichtung und der durch die Schutzvorrichtung gebildete bzw. ausbildbare Hohlraum sind dazu ausgebildet, das Ladekabel aufzunehmen. Das Stützgerüst und der Mantel sind in der Längsrichtung verformbar, wobei und/oder wodurch eine Länge der Schutzvorrichtung veränderbar bzw. zu verändern und an eine Länge des Ladekabels zwischen den beiden Einrichtungen anzupassen bzw. anpassbar ist. Die Schutzvorrichtung weist einen elektrischen und/oder hydraulischen Antrieb und einen ausfahrbaren teleskopierbaren Führungsstab auf, wobei der Antrieb an einem ersten Ende des Stützgerüsts angeordnet ist, wobei ein erstes Ende des Führungsstabs an dem Antrieb angeordnet ist, wobei ein zweites Ende des Führungsstabs an einem zweiten Ende des Stützgerüsts angeordnet ist, wobei der Führungsstab und somit die Schutzvorrichtung mit dem elektrischen und/oder hydraulischen Antrieb je nach Bedarf verlängert oder verkürzt und somit verändert wird.

Dabei ist die Aufnahmeeinrichtung in einer von außen zugänglichen Außenwand einer der beiden Einrichtungen angeordnet. Falls die Aufnahmeeinrichtung bspw. in der Außenwand bzw. in einem von außen zugänglichen Außenbereich des bspw. als Kraftfahrzeug ausgebildeten Fahrzeugs angeordnet ist, wird die Schutzvorrichtung vor dem Ladevorgang von einem Nutzer an einer Position außerhalb des Kraftfahrzeugs aus der Aufnahmeeinrichtung entnommen, entfaltet bzw. auseinandergefaltet und über das Ladekabel gezogen, wobei das Ladekabel entsprechend durch die Schutzvorrichtung gezogen wird. Nach dem Ladevorgang kann die Schutzvorrichtung von dem Nutzer ebenfalls an einer Position außerhalb des Kraftfahrzeugs zusammengefaltet und in der Aufnahmeeinrichtung angeordnet bzw. verstaut werden.

In Ausgestaltung der Schutzvorrichtung ist mindestens ein Abschnitt, d. h. ein einzelner Abschnitt oder mehrere Abschnitte, des Stützgerüsts mit mindestens einem Abschnitt, d. h. mit einem einzelnen Abschnitt oder mit mehreren Abschnitten, des Mantels verbunden, wobei der mindestens eine Abschnitt des Stützgerüsts und der mindestens eine Abschnitt des Mantels in der Längsrichtung gemeinsam bzw. simultan verformbar sind.

Weiterhin ist das Stützgerüst aus helix- bzw. spiralförmigem Material gebildet. Der Mantel ist üblicherweise aus verformbarem Material gebildet. Dabei ist es möglich, dass das Material für den Mantel flexibel, biegeschlaff und/oder elastisch verformbar ist. Dabei ist es möglich, dass der Mantel in einem Fall, wenn das Stützgerüst und somit die Stützvorrichtung in einem auseinandergefalteten Zustand eine maximale Länge aufweist, durch die in diesem Fall expandierte Stützvorrichtung auseinandergefaltet und/oder gespannt ist bzw. wird. Dagegen ist bzw. wird der Mantel in einem anderen Fall, wenn das Stützgerüst und somit die Stützvorrichtung in einem zusammengefalteten Zustand eine minimale Länge aufweist, durch die in diesem Fall komprimierte Stützvorrichtung entspannt, wobei es möglich ist, dass der mindestens eine Abschnitt des Mantels entspannt und/oder zusammengefaltet wird.

In Ausgestaltung ist das Stützgerüst aus Metall, bspw. aus spiralförmigem Draht, bspw. Metalldraht, und/oder aus Kunststoff, bspw. spiralförmigem Draht, bspw. Kunststoffdraht bzw. Kunststofffilament, gebildet, wobei das Stützgerüst auch aus einer Kombination aus Metall und Kunststoff gebildet sein kann und bspw. aus einem mit Kunststoff beschichteten Metalldraht gebildet ist. Das Metall, bspw. der Metalldraht für das Stützgerüst, ist bspw. aus festem Stahl. Draht, d. h. Metalldraht, ist in der Regel aus einem dünnen, langen und biegsam geformten Metall mit elliptischem, bspw. kreisförmigem, oder eckigem, bspw. flachem und/oder vierkantförmigem Querschnitt bzw. Profil. Es ist möglich, dass der Begriff Kunststoffdraht auch für stärkere Kunststofffilamente verwendet wird. Ein Polymermonofil mit einer gewissen Steifigkeit, ein Polyethylendraht oder ein Nylondraht kann ebenfalls als Draht, insbesondere Kunststoffdraht, bezeichnet werden.

Weiterhin ist der Mantel in Ausgestaltung aus Kunststoff, bspw. Kunststoffgewebe, aus Textilmaterial, bspw. Textilgewebe, aus Kevlar, bspw. Kevlargewebe, und/oder aus Metall, bspw. Metallgewebe gebildet, wobei der Mantel ggf. auch aus einer Kombination mehrerer der genannten Materialien gebildet sein kann.

Die Schutzvorrichtung weist zwei Enden auf, wobei jeweils ein Ende mit einer der beiden Einrichtungen verbunden ist. Dabei ist eines der Enden mit einer der beiden Einrichtungen ständig verbunden und dabei an dieser Einrichtung befestigt ist, wohingegen das andere Ende mit der anderen Einrichtung vorübergehend und wieder lösbar mechanisch zu verbinden bzw. verbindbar ist. Alternativ sind die zwei Enden der Schutzvorrichtung an beiden Einrichtungen vorüberhegend und wieder lösbar mechanisch zu verbinden bzw. verbindbar. Hierzu weist die Stützvorrichtung mindestens eine Befestigungsvorrichtung an mindestens einem Ende auf, wobei die mindestens eine Befestigungsvorrichtung dazu ausgebildet ist, mindestens ein Ende der Schutzvorrichtung mit mindestens einer der beiden Einrichtungen zumindest vorübergehend und wieder lösbar mechanisch zu verbinden. Dabei kann die mindestens eine Befestigungsvorrichtung magnetisch sein und an einem metallischen Bereich jeweils einer der Einrichtungen haften. Es ist auch möglich, dass die mindestens eine Befestigungsvorrichtung ein Schloss und/oder eine Verriegelung aufweist, mit dem bzw. mit der die Befestigungsvorrichtung an einem gegenstückig ausgebildeten Befestigungsmodul der jeweiligen Einrichtung vorübergehend und wieder lösbar zu befestigen bzw. befestigbar ist.

Die Schutzvorrichtung ist zum Schützen eines Ladekabels ausgebildet, mit dem ein Fahrzeug, bspw. ein Kraftfahrzeug, als eine erste Einrichtung mit einer elektrischen Ladestation, bspw. einer Ladesäule, als zweite Einrichtung verbunden wird, wobei elektrische Energie bei dem Ladevorgang aus der Ladestation zu dem Kraftfahrzeug übertragen wird, dabei ist die Schutzvorrichtung dazu ausgebildet, das Ladekabel zwischen dem Kraftfahrzeug und der Ladestation schützend zu umhüllen.

Außerdem weist die Schutzvorrichtung den Antrieb und den ausfahrbaren Führungsstab auf, wobei der Antrieb an einem ersten Ende des Stützgerüsts angeordnet, bspw. befestigt ist und zum Antreiben bzw. zum Bewegen des Führungsstabs ausgebildet ist. Der ausfahrbare und/oder teleskopierbare Führungsstab bzw. Teleskopstab bzw. ein entsprechendes Teleskoprohr weist ein erstes und ein zweites Ende auf, wobei ein Abstand der beiden Enden über den Antrieb verändert wird. Dabei ist das erste Ende des Führungsstabs an dem Antrieb angeordnet, bspw. befestigt. Das zweite Ende des Führungsstabs ist an einem zweiten Ende des Stützgerüsts angeordnet, bspw. befestigt. Der Antrieb ist dazu ausgebildet, eine Länge des Führungsstabs und somit auch die Länge der Schutzvorrichtung und des davon umschlossenen Hohlraums, die sich in Längsrichtung erstrecken, in Längsrichtung zu verändern, wobei der Führungsstab und somit die Schutzvorrichtung mit dem Antrieb je nach Bedarf verlängert oder verkürzt wird. Der Führungsstab ist bspw. aus Metall oder aus Glasfasermaterial. Der Antrieb ist bspw. elektrisch und/oder hydraulisch. Weiterhin kann der Führungsstab biegsam und/oder flexibel sein.

Das erfindungsgemäße Verfahren ist zum Schützen eines elektrischen Ladekabels zum elektrischen Verbinden von zwei Einrichtungen bei einem Ladevorgang mit einer Schutzvorrichtung, bspw. einer Ausführungsform der voranstehend vorgestellten Schutzvorrichtung, für dieses elektrische Ladekabel vorgesehen. Die Schutzvorrichtung weist ein Stützgerüst und einen Mantel auf, die einen für das Ladekabel vorgesehenen Hohlraum in einer Längsrichtung schlauchförmig bzw. schlauchartig umhüllen, wobei sich der Hohlraum in Längsrichtung erstreckt, wobei das Ladekabel von der Schutzvorrichtung umhüllt wird, wobei das Stützgerüst und der Mantel in der Längsrichtung verformt werden, wobei und/oder wodurch eine Länge der Schutzvorrichtung verändert und an eine Länge des durch den Hohlraum geführten Ladekabels zwischen den beiden Einrichtungen angepasst wird, wobei das Ladekabel bei dem Verfahren, insbesondere während des Ladevorgangs, von der Schutzvorrichtung umhüllt und vor etwaigen äußeren Umwelteinflüssen geschützt wird. Die Schutzvorrichtung weist einen elektrischen und/oder hydraulischen Antrieb und einen ausfahrbaren teleskopierbaren Führungsstab auf, wobei der Antrieb an einem ersten Ende des Stützgerüsts angeordnet ist, wobei ein erstes Ende des Führungsstabs an dem Antrieb angeordnet ist, wobei ein zweites Ende des Führungsstabs an einem zweiten Ende des Stützgerüsts angeordnet ist, wobei der Führungsstab und somit die Schutzvorrichtung mit dem elektrischen und/oder hydraulischen Antrieb je nach Bedarf verlängert oder verkürzt und somit verändert wird.

Das Verfahren wird bei einem und/oder für einen elektrischen Ladevorgang durchgeführt, bei dem bspw. ein Kraftfahrzeug als erste Einrichtung über das Ladekabel bspw. von einer elektrischen Ladestation als zweite Einrichtung mit elektrischer Energie versorgt wird, wobei die beiden Einrichtungen zum Vorbereiten des Ladevorgangs bzw. vor dem Ladevorgang über das Ladekabel miteinander elektrisch verbunden werden, wobei die Schutzvorrichtung ausgehend von einem zusammengefalteten Zustand in der Längsrichtung verlängert, auseinandergefaltet bzw. entfaltet und über das Ladekabel bzw. um das Ladekabel herum gezogen wird. Entsprechend wird das Ladekabel durch die Schutzvorrichtung gezogen, in diese eingeführt und/oder in diese eingefädelt. Weiterhin wird die Schutzvorrichtung mit mindestens einer der beiden Einrichtungen verbunden bzw. an mindestens einer der beiden Einrichtungen befestigt, d. h. dass die Schutzvorrichtung zumindest mit jener Einrichtung verbunden bzw. daran befestigt wird, von der sie bislang getrennt ist bzw. war, also mit der sie noch nicht verbunden ist. Hierbei ist vorgesehen, dass die Schutzvorrichtung, nachdem sie über das Ladekabel gezogen worden ist, mit beiden Einrichtungen verbunden ist. Dabei umhüllt die Schutzvorrichtung das Ladekabel. Dabei ist es möglich, dass die Schutzvorrichtung auch unabhängig von dem Ladevorgang mit einer der beiden Einrichtungen, bspw. mit dem Kraftfahrzeug oder der Ladestation, üblicherweise im zusammengefalteten Zustand, bereits verbunden bzw. daran befestigt ist, wobei das Ladekabel vor dem Ladevorgang entfaltet, über das Ladekabel gezogen und mit der anderen der beiden Einrichtungen, bspw. der Ladestation oder dem Kraftfahrzeug, zur Durchführung des Ladevorgangs vorübergehend verbunden bzw. an der anderen Einrichtung vorübergehend befestigt wird. Nach dem Ladevorgang wird die Schutzvorrichtung von der anderen der beiden Einrichtungen wieder getrennt und/oder entfernt.

Falls die Schutzvorrichtung von beiden Einrichtungen unabhängig ist, wird die Schutzvorrichtung vor dem Ladevorgang mit einer der beiden Einrichtungen verbunden bzw. daran befestigt, entfaltet, über das Ladekabel gezogen und dann mit der anderen der beiden Einrichtungen verbunden bzw. daran befestigt. Alternativ ist es möglich, dass die Schutzvorrichtung zunächst über das Ladekabel gezogen und dann mit beiden Einrichtungen verbunden wird. Nach dem Ladevorgang wird die Schutzvorrichtung von jeder der beiden Einrichtungen wieder getrennt, zusammengefaltet und von dem Ladekabel entfernt.

Bei dem Verfahren ist bzw. wird bereits vor dem Ladevorgang ein erstes Ende der Schutzvorrichtung an einer der beiden Einrichtungen, bspw. der ersten Einrichtung, befestigt und im zusammengefalteten Zustand in einer Aufnahmeeinrichtung der ersten Einrichtung angeordnet, wobei die Aufnahmeeinrichtung zur Unterbringung der Schutzvorrichtung an einer Außenwand dieser Einrichtung, bspw. ersten Einrichtung, eine Öffnung aufweist, wobei die Schutzvorrichtung vor dem Ladevorgang durch die Öffnung aus der Aufnahmeeinrichtung herausgezogen und in Längsrichtung verlängert bzw. auseinandergefaltet wird, wobei ein zweites Ende der Schutzvorrichtung über eine Befestigungsvorrichtung mit der anderen der beiden Einrichtungen, bspw. der zweiten Einrichtung, vorübergehend und wieder lösbar verbunden wird bzw. an dieser Einrichtung vorübergehend wieder lösbar befestigt wird, wobei die Befestigungsvorrichtung nach dem Ladevorgang von der anderen, bspw. zweiten Einrichtung wieder gelöst und/oder getrennt wird, wobei die Schutzvorrichtung zusammengefaltet und in der Aufnahmeeinrichtung angeordnet bzw. darin aufgenommen bzw. untergebracht wird.

Die vorgestellte Schutzvorrichtung ist für ein Ladekabel vorgesehen, das dazu ausgebildet ist, eine Batterie in einem Fahrzeug mit einer Ladestation elektrisch zu verbinden und Strom von der Ladestation, die bspw. als Ladesäule ausgebildet und/oder zu bezeichnen ist, zu der Batterie in dem Fahrzeug zu leiten. Das Fahrzeug wird mit einem Elektromotor angetrieben bzw. fortbewegt, der dazu ausgebildet ist, elektrische Energie, die in der Batterie gespeichert ist, in mechanische Energie umzuwandeln. Das Fahrzeug kann bspw. als Hybridfahrzeug (plug-in-hybrid electric vehicle, PHEV) oder Elektrofahrzeug (battery electric vehicle, BEV) ausgebildet sein bzw. bezeichnet werden.

In Ausgestaltung des Systems und/oder des Verfahrens wird im Bereich eines Kontaktmoduls des Fahrzeugs, das eine Ladesteckdose aufweist und mit einem Deckel, bspw. mit einem Tankdeckel, verschlossen werden kann, die zusammenfaltbare Schutzvorrichtung bzw. Schutzhülle für das Ladekabel integriert, die mit dem Fahrzeug, insbesondere mit einer Andockstation, fest verbunden ist bzw. wird und bspw. zur Reinigung ggf. abnehmbar ist. Die Schutzvorrichtung, die als Schutzhülle ausgebildet und/oder zu bezeichnen ist, ist hierbei wie ein Schlauch aufgebaut und besteht aus dem Stützgerüst aus Metall und/oder aus Kunststoff und dem Mantel bzw. einer Hülle aus Kunststoff und/oder Textilmaterial, wobei der Metalldraht mit dem Mantel aus Kunststoff zusammenschiebbar ist und im zusammengeschobenen Zustand in einem Bauraum hinter dem Deckel bzw. Tankdeckel des Kontaktmoduls für die Ladesteckdose verstaut ist. Wenn das Fahrzeug (PHEV bzw. BEV) zum Laden angesteckt ist, wird die Schutzhülle einfach über das Ladekabel gezogen und z. B. mit einem Magnet, einer Klammer oder einem Schloss an der Ladestation und/oder an mindestens einem Ende des Ladekabels befestigt, wobei es sich bspw. um ein anderes Ende des Ladekabels handelt, das der Ladestation zugewandt und von dem Fahrzeug abgewandt ist.

In einer möglichen Ausführung ist die als Schlauch ausgebildete bzw. zu bezeichnende Schutzvorrichtung aus einem mechanisch besonders widerstandsfähigen Material gefertigt, so dass für das Ladekabel ein zusätzlicher Schutz gegen Beschädigung oder Diebstahl besteht.

Die Schutzvorrichtung beruht auf einer Schutzhülle, die mit dem Fahrzeug, bspw. einem Pkw bzw. Kraftfahrzeug, in Ausgestaltung fest verbunden ist, manuell über das Ladekabel gezogen wird und am anderen Ende des Ladekabels oder an der Ladesäule befestigt bzw. verriegelt wird. In einer weiteren Ausführung kann die bspw. als Schutzhülle ausgebildete Schutzvorrichtung ggf. den elektrischen Antrieb aufweisen, der dazu ausgebildet ist, die Länge der Schutzvorrichtung zu verändern, wobei die Schutzvorrichtung mit dem Antrieb und dem Führungsstab vor einem elektrischen Lade- bzw. Tankvorgang in Längsrichtung ausgefahren und danach wieder eingefahren wird, so dass sich der Fahrer beim Zusammenfalten der Schutzvorrichtung seine Hände nicht verschmutzt. Bei dem Ladevorgang wird nur die Schutzvorrichtung bzw. Schutzhülle verschmutzt, wohingegen das von der Schutzvorrichtung umhüllte und geschützte Ladekabel sauber bleibt. Die Schutzhülle ist bspw. im Außenbereich des Fahrzeugs, bspw. im Bereich der Tankklappe bzw. des Tankdeckels, angebracht, so dass im Innenraum des Fahrzeugs keine Verschmutzung entsteht.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
- Figur 1: zeigt in schematischer Darstellung eine Ausführungsform des erfindungsgemäßen Systems, das eine Ausführungsform einer Schutzvorrichtung aufweist, zur Durchführung einer Ausführungsform des erfindungsgemäßen Verfahrens.
- Figur 2: zeigt in schematischer Darstellung ein Detail aus Figur 1.
- Figur 3: zeigt in schematischer Darstellung weitere Details aus Figur 1.

Die Figuren werden zusammenhängend und übergreifend beschrieben, gleichen Bezugszeichen sind dieselben Komponenten zugeordnet.

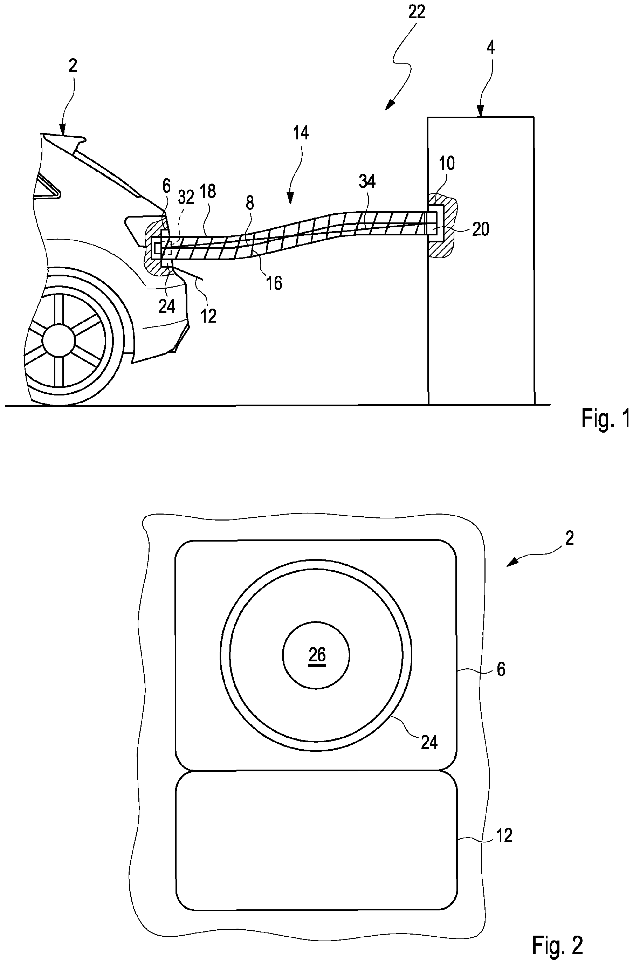

Figur 1 zeigt in schematischer Darstellung ein als Kraftfahrzeug 2 ausgebildetes und/oder zu bezeichnendes Fahrzeug, das mit elektrischer Energie angetrieben bzw. fortbewegt wird. Hierzu ist es erforderlich, die elektrische Energie in eine Batterie des Kraftfahrzeugs 2 zu laden. Dabei wird zur Durchführung eines Ladevorgangs das Kraftfahrzeug 2 zu einer Ladestation 4 gefahren und neben dieser abgestellt. Weiterhin wird eine erste Andockstation 6 des Kraftfahrzeugs 2 über ein elektrisches Ladekabel 8 mit einer zweiten Andockstation 10 der Ladestation 4 verbunden. Diese erste Andockstation 6 des Kraftfahrzeugs 2 ist als Vertiefung ausgebildet und an einem Außenbereich bzw. in einem Außenbereich des Kraftfahrzeugs 2 integriert und durch einen Deckel 12 verschließbar, wobei dieser Deckel 12 auch als Tankdeckel bezeichnet werden und/oder ausgebildet sein kann.

Weiterhin zeigt Figur 1 auch die Ausführungsform der Schutzvorrichtung 14, die hier exemplarisch ein Stützgerüst 16 aus spiralförmig gewickeltem Metalldraht oder Kunststoffdraht und einen Mantel 18 aus Kunststoff oder Textilmaterial aufweist, wobei das Stützgerüst 16 und der Mantel 18 hier miteinander verbunden sind. Das Stützgerüst 16 und der Mantel 18 bzw. die hier schlauchförmige Schutzvorrichtung 14 umhüllen bzw. umhüllt einen Hohlraum zur Aufnahme des Ladekabels 8. Dabei zeigt Figur 1 die Schutzvorrichtung 14 in einem montierten Zustand. Weiterhin ist jeweils eine Länge des Stützgerüsts 16 und des Mantels 18 und somit auch eine Länge der Schutzvorrichtung 14 in einer Längsrichtung, insbesondere entlang des Ladekabels 8, variierbar.

Figur 1 zeigt auch einen elektrischen oder hydraulischen Antrieb 32, der an einem ersten Ende des Stützgerüsts 16 und somit auch an einem ersten Ende der Schutzvorrichtung 14 angeordnet ist, wobei ein jeweiliges erstes Ende hier der Andockstation 6 des Kraftfahrzeugs 2 zugeordnet ist. Außerdem ist an dem Antrieb 32 ein erstes Ende eines ausfahrbaren, bspw. teleskopierbaren Führungsstabs 34 angeordnet, ein zweites Ende des Führungsstabs 34 ist hier an einem zweiten Ende des Stützgerüsts 16 und somit an einem zweiten Ende der Schutzvorrichtung 14 angeordnet, wobei ein jeweiliges zweites Ende hier der Andockstation 10 der Ladestation 4 zugeordnet ist. Außerdem ist an dem zweiten Ende des Stützgerüsts 16 bzw. der Schutzvorrichtung 14 eine mechanische Befestigungsvorrichtung 20 angeordnet, über die die Schutzvorrichtung 14 an der Ladestation 4 vorübergehend befestigt ist. Der Führungsstab 34 kann in Ausgestaltung biegsam sein und somit eine Abweichung einer Form der Schutzvorrichtung 14 entlang einer geraden Längsrichtung ausgleichen. Somit kann die Schutzvorrichtung 14 mit dem Führungsstab 34 geradlinig verlängert oder verkürzt werden. Da der Führungsstab 34 auch biegsam bzw. elastisch verformbar sein kann, kann er sich jedoch auch an eine jeweilige Form der Schutzvorrichtung 14 anpassen, wenn diese teilweise gebogen ist und evtl. wie eine Kettenlinie durchhängt.

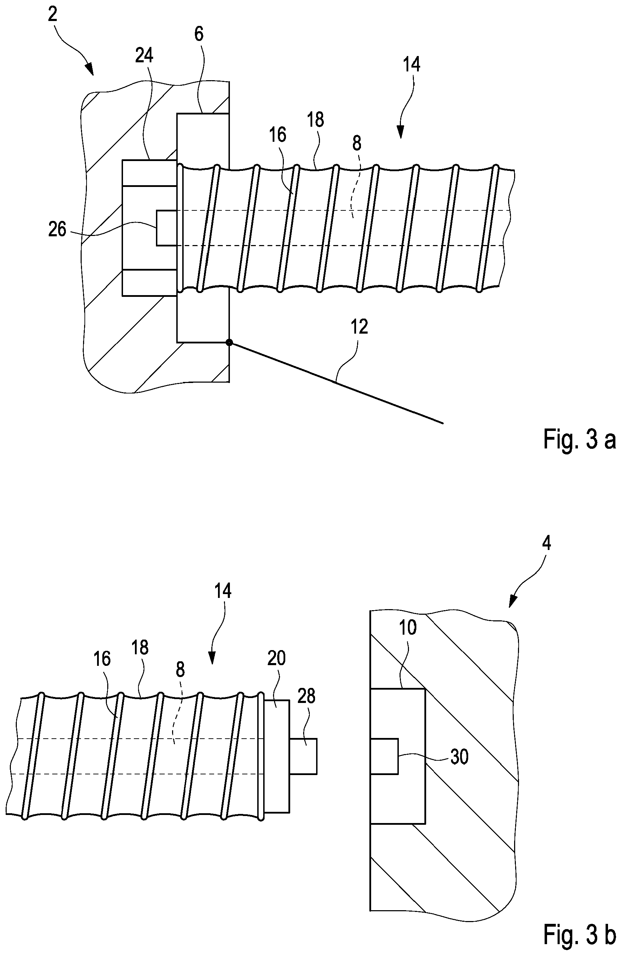

Die vorgestellte Ausführungsform der Schutzvorrichtung 14 ist hier auch als Komponente der Ausführungsform des erfindungsgemäßen Systems 22 ausgebildet. Dabei umfasst das System 22 als eine weitere Komponente eine Aufnahmeeinrichtung 24, die als ringförmige Vertiefung und/oder als ringförmige Öffnung in der Andockstation 6 dazu ausgebildet ist, die Schutzvorrichtung 14 komplett aufzunehmen, wenn die Schutzvorrichtung 14 komprimiert bzw. zusammengefaltet ist und dabei eine minimale Länge aufweist. Weitere Details zu der Schutzvorrichtung 14 und dem System 22 gehen aus den Figuren 2, 3a und 3b hervor.

Dabei zeigt Figur 2 die erste Andockstation 6 im Außenbereich des Kraftfahrzeugs 2 in Draufsicht, die mit dem Deckel 12 verschließbar ist. In der Andockstation 6 ist neben der Aufnahmeeinrichtung 24 für die Schutzvorrichtung 14 auch eine Schnittstelle 26 für das Ladekabel 8 integriert, die hier als elektrisches Steckelement, je nach Definition bspw. als Steckdose oder als Steckbuchse ausgebildet bzw. zu bezeichnen und weiterhin dazu ausgebildet ist, ein hierzu gegenstückig ausgebildetes Steckelement des Ladekabels 8 aufzunehmen, das je nach Definition bspw. als Steckbuchse oder als Steckdose ausgebildet bzw. zu bezeichnen und dem Kraftfahrzeug 2 zugewandt bzw. zugeordnet ist.

In einer alternativen Ausgestaltung der ersten Andockstation 6 des Kraftfahrzeugs 2 ist es denkbar, dass diese lediglich die Aufnahmeeinrichtung 24 für die Schutzvorrichtung 14 aufweist und dass die Schnittstelle 26 als Öffnung für das Kabel 8 ausgebildet ist, wobei es möglich ist, das Kabel 8 in die Schnittstelle 26 und somit in die erste Andockstation 6 vollständig einzufahren.

Figur 3a zeigt in schematischer Schnittdarstellung ein erstes Ende des Ladekabels 8 und ein erstes Ende der Schutzvorrichtung 14, die hier der ersten Andockstation 6 des Kraftfahrzeugs 2 zuzuordnen sind. Dagegen zeigt Figur 3b ein zweites Ende des Ladekabels 8 und ein zweites Ende der Schutzvorrichtung 14, die der zweiten Andockstation 10 der Ladestation 4 zuzuordnen sind, in schematischer Schnittdarstellung.

Aus beiden Figuren 3a und 3b gehen auch Details zu einem Aufbau der schlauchförmigen Schutzvorrichtung 14 hervor, die dazu ausgebildet ist, das Ladekabel 8 zu umhüllen und dabei einen schlauchförmigen Hohlraum zur Aufnahme des Ladekabels 8 bereitzustellen. Im Detail umfasst die Schutzvorrichtung 14 hier einen spiralförmig bzw. helixförmig gewickelten Metalldraht als Stützgerüst 16, wobei eine Ganghöhe zwischen Windungen des Metalldrahts bzw. des Stützgerüsts 16 verändert werden kann. Außerdem ist der Mantel 18 aus Kunststoff hier als spiralförmiges Band ausgebildet, das mit dem Stützgerüst 16 verbunden und bspw. biegeschlaff und/oder elastisch verformbar ist. Falls das Stützgerüst 16 in einer Längsrichtung der Schutzvorrichtung 14 verlängert wird, ergibt sich, dass der Mantel 18 entsprechend gedehnt und/oder auseinandergefaltet wird. Der von der Schutzvorrichtung 14 umhüllte bzw. umschlossene Hohlraum erstreckt sich in der Längsrichtung. Falls das Stützgerüst 16 dagegen komprimiert bzw. zusammengefaltet wird, wird der Mantel 18 entsprechend entspannt und/oder zusammengefaltet.

Bei der Ausführungsform des erfindungsgemäßen Verfahrens ist vorgesehen, dass die Schutzvorrichtung 14 während einer Fahrt des Kraftfahrzeugs 2 vollständig zusammengefaltet und in der Aufnahmeeinrichtung 24 insbesondere komplett aufgenommen bzw. untergebracht ist. Sobald das Kraftfahrzeug 2 zur Durchführung des Ladevorgangs neben der Ladestation 4 abgestellt ist, ist vorgesehen, dass bspw. ein als Stecker ausgebildetes bzw. zu bezeichnendes elektrisches Kontaktelement 28 am zweiten Ende des Ladekabels in ein gegenstückig ausgebildetes elektrisches Kontaktelement 30 an der zweiten Andockstation 10 der Ladestation 4 eingesteckt wird, wobei eines der beiden Kontaktelemente 28, 30, bspw. Steckelemente, als Steckdose und das andere als Steckbuchse ausgebildet ist. Hierdurch wird zwischen der Ladestation 4 und der Batterie des Kraftfahrzeugs 2 über das Ladekabel 8 eine elektrische Verbindung zum Transport elektrischer Energie von der Ladestation 4 zu der Batterie bereitgestellt. Ergänzend ist bei der Ausführungsform des Verfahrens nunmehr vorgesehen, dass die Schutzvorrichtung 14 ausgehend von ihrem zusammengefalteten Zustand auseinandergefaltet und über das Ladekabel 8 gezogen wird, wobei das Ladekabel 8 von der Schutzvorrichtung 14 und den hierfür vorgesehenen Hohlraum umhüllt wird. Ergänzend wird die Befestigungsvorrichtung 20 an der Andockstation 10 der Ladestation 4 vorübergehend befestigt. Mit der Schutzvorrichtung 14 ist es möglich, das Ladekabel 8 zwischen dem Kraftfahrzeug 2 und der Ladestation 4, bspw. einer Ladesäule, während dem Ladevorgang vor Verschmutzung und/oder vor Beschädigung zu schützen. Nach dem Ladevorgang wird die Befestigungsvorrichtung 20 und somit die Schutzvorrichtung 14 von der Ladestation 4 getrennt, zusammengefaltet und in der Aufnahmeeinrichtung 24 untergebracht.

## Patentansprüche

1. System, das eine Schutzvorrichtung (14) für ein elektrisches Ladekabel (8) zum Verbinden von zwei Einrichtungen bei einem Ladevorgang und eine Aufnahmeeinrichtung (24) für die Schutzvorrichtung (14) aufweist, wobei diese Aufnahmeeinrichtung (24) in einer Außenwand nur einer der beiden Einrichtungen angeordnet ist, wobei die Schutzvorrichtung (14) ein Stützgerüst (16) und einen Mantel (18) aufweist, die dazu ausgebildet sind, einen sich in einer Längsrichtung erstreckenden Hohlraum zu umhüllen, durch den ein Ladekabel (8) führbar ist, wobei das Stützgerüst (16) und der Mantel (18) in der Längsrichtung verformbar sind, wobei eine Länge der Schutzvorrichtung (14) zu verändern und an eine Länge des durch den Hohlraum zu führenden Ladekabels (8) zwischen den beiden Einrichtungen anzupassen ist, **dadurch gekennzeichnet, dass** die Schutzvorrichtung (14) einen elektrischen und/oder hydraulischen Antrieb (32) und einen ausfahrbaren teleskopierbaren Führungsstab (34) aufweist, wobei der Antrieb (32) an einem ersten Ende des Stützgerüsts (16) angeordnet ist, wobei ein erstes Ende des Führungsstabs (34) an dem Antrieb (32) angeordnet ist, wobei ein zweites Ende des Führungsstabs (34) an einem zweiten Ende des Stützgerüsts (16) angeordnet ist, wobei der elektrische und/oder hydraulische Antrieb (32) dazu ausgebildet ist, den Führungsstab (34) und somit die Schutzvorrichtung (14) je nach Bedarf zu verlängern oder zu verkürzen und somit zu verändern, wobei ein erstes Ende der Schutzvorrichtung (14) in der Aufnahmeeinrichtung (24) der einen der beiden Einrichtungen angeordnet ist, wobei die Schutzvorrichtung (14) mindestens eine Befestigungsvorrichtung (20) aufweist, die dazu ausgebildet ist, ein zweites Ende der Schutzvorrichtung (14) mit der anderen der beiden Einrichtungen, in welcher die Aufnahmeeinrichtung (24) nicht angeordnet ist, zu verbinden.

2. System nach Anspruch 1, bei dem mindestens ein Abschnitt des Stützgerüsts (16) mit mindestens einem Abschnitt des Mantels (18) verbunden ist.

3. System nach Anspruch 1 oder 2, bei dem das Stützgerüst (16) aus Metall, bspw. aus spiralförmigem Metalldraht, und/oder aus Kunststoff, bspw. spiralförmigem Kunststoffdraht, gebildet ist und/oder bei dem der Mantel (18) aus Kunststoff, aus Textilmaterial, aus Kevlar und/oder aus Metall gebildet ist.

4. Verfahren zum Schützen eines elektrischen Ladekabels (8) zum elektrischen Verbinden von zwei Einrichtungen bei einem Ladevorgang mit einer Schutzvorrichtung (14), wobei die Schutzvorrichtung (14) ein Stützgerüst (16) und einen Mantel (18) aufweist, mit denen ein Hohlraum für das Ladekabel (8) in einer Längsrichtung umhüllt wird, wobei das Stützgerüst (16) und der Mantel (18) in der Längsrichtung verformt werden, wobei eine Länge der Schutzvorrichtung (14) verändert und an eine Länge des durch den Hohlraum geführten Ladekabels (8) zwischen den beiden Einrichtungen angepasst wird, wobei die Schutzvorrichtung (14) einen elektrischen und/oder hydraulischen Antrieb (32) und einen ausfahrbaren teleskopierbaren Führungsstab (34) aufweist, wobei der Antrieb (32) an einem ersten Ende des Stützgerüsts (16) angeordnet ist, wobei ein erstes Ende des Führungsstabs (34) an dem Antrieb (32) angeordnet ist, wobei ein zweites Ende des Führungsstabs (34) an einem zweiten Ende des Stützgerüsts (16) angeordnet ist, wobei der Führungsstab (34) und somit die Schutzvorrichtung (14) mit dem elektrischen und/oder hydraulischen Antrieb (32) je nach Bedarf verlängert oder verkürzt und somit verändert wird, **dadurch gekennzeichnet, dass** das Verfahren bei einem Ladevorgang durchgeführt wird, bei dem ein Fahrzeug als erste Einrichtung über das Ladekabel (8) von einer elektrischen Ladestation (4) als zweite Einrichtung mit elektrischer Energie versorgt wird, wobei die beiden Einrichtungen vor dem Ladevorgang über das Ladekabel (8) miteinander verbunden werden, wobei die Schutzvorrichtung (14) mit dem Antrieb (32) ausgehend von einem zusammengefalteten Zustand in der Längsrichtung verlängert, auseinandergefaltet und über das Ladekabel (8) gezogen wird, wobei die Schutzvorrichtung (14) mit mindestens einer der beiden Einrichtungen verbunden wird, von der die Schutzvorrichtung (14) bislang getrennt ist, wobei ein erstes Ende der Schutzvorrichtung (14) in einer Aufnahmeeinrichtung (24) einer der beiden Einrichtungen angeordnet wird, wobei die Aufnahmeeinrichtung (24) an einer Außenwand der Einrichtung eine Öffnung aufweist, wobei die Schutzvorrichtung (14) vor dem Ladevorgang mit dem Antrieb (32) durch die Öffnung aus der Aufnahmeeinrichtung (24) herausgezogen und in Längsrichtung verlängert wird, wobei ein zweites Ende der Schutzvorrichtung (14) über eine Befestigungsvorrichtung (20) mit der anderen der beiden Einrichtung verbunden wird, wobei die Befestigungsvorrichtung (20) nach dem Ladevorgang von der anderen Einrichtung gelöst wird, wobei die Schutzvorrichtung (14) zusammengefaltet und in der Aufnahmeeinrichtung angeordnet wird.

## Claims

1. System which has a protective device (14) for an electrical charging cable (8) for connecting two apparatuses during a charging procedure and a receiving apparatus (24) for the protective device (14), wherein this receiving apparatus (24) is arranged in an outer wall of only one of the two apparatuses, wherein the protective device (14) has a supporting frame (16) and a jacket (18) which are configured to enclose a cavity extending in a longitudinal direction, through which a charging cable (8) can be passed, wherein the supporting frame (16) and the jacket (18) are deformable in the longitudinal direction, wherein a length of the protective device (14) is to be changed and to be adapted between the two apparatuses to a length of the charging cable (8) to be passed through the cavity, **characterized in that** the protective device (14) has an electrical and/or hydraulic drive (32) and an extendable telescopic guiding rod (34), wherein the drive (32) is arranged at a first end of the supporting frame (16), wherein a first end of the guiding rod (34) is arranged at the drive (32), wherein a second end of the guiding rod (34) is arranged at a second end of the supporting frame (16), wherein the electrical and/or hydraulic drive (32) is configured to extend or shorten the guiding rod (34) and thus the protective device (14) depending on requirements, and thus to change them, wherein a first end of the protective device (14) is arranged in the receiving apparatus (24) of the one of the two apparatuses, wherein the protective device (14) has at least one fastening device (20) which is configured to connect a second end of the protective device (14) to the other of the two apparatuses, in which the receiving apparatus (24) is not arranged.

2. System according to claim 1, in which at least one portion of the supporting frame (16) is connected to at least one portion of the jacket (18).

3. System according to claim 1 or 2, in which the supporting frame (16) is formed from metal, for example from spiral-shaped metal wire, and/or from plastic, for example from spiral-shaped plastic wire, and/or in which the jacket (18) is formed from plastic, from textile material, from Kevlar and/or from metal.

4. Method for protecting an electrical charging cable (8) for the electrical connection of two apparatuses during a charging procedure with a protective device (14), wherein the protective device (14) has a supporting frame (16) and a jacket (18), with which a cavity for the charging cable (8) in a longitudinal direction is enclosed, wherein the supporting frame (16) and the jacket (18) are deformed in the longitudinal direction, wherein a length of the protective device (14) is changed and adapted between the two apparatuses to a length of the charging cable (8) passed through the cavity, wherein the protective device (14) has an electrical and/or hydraulic drive (32) and an extendable telescopic guiding rod (34), wherein the drive (32) is arranged at a first end of the supporting frame (16), wherein a first end of the guiding rod (34) is arranged at the drive (32), wherein a second end of the guiding rod (34) is arranged at a second end of the supporting frame (16), wherein the guiding rod (34) and thus the protective device (14) are extended or shortened with the electrical and/or hydraulic drive (32) depending on requirements, and thus are changed, **characterized in that** the method is carried out in a charging procedure in which a vehicle as a first apparatus is supplied via the charging cable (8) with electrical energy from an electrical charging station (4) as a second apparatus, wherein the two apparatuses are connected to one another using the charging cable (8) prior to the charging procedure, wherein the protective device (14) with the drive, starting from a folded-together state, is extended in the longitudinal direction, is unfolded and pulled over the charging cable (8), wherein the protective device (14) is connected to at least one of the two apparatuses, from which the protective device (14) is hitherto separate, wherein a first end of the protective device (14) is arranged in a receiving apparatus (24) of one of the two apparatuses, wherein the receiving apparatus (24) has at an outer wall of the apparatus an opening, wherein the protective device (14), prior to the charging procedure, is drawn out of the receiving apparatus (24) with the drive (32) through the opening and is extended in longitudinal direction, wherein a second end of the protective device (14) is connected via a fastening device (20) to the other of the two apparatuses, wherein, after the charging procedure, the fastening device (20) is released from the other apparatus, wherein the protective device (14) is folded together and arranged in the receiving apparatus.

## Revendications

1. Système qui présente un dispositif de protection (14) pour un câble de charge (8) électrique pour relier deux appareils lors d'un processus de charge et un appareil de réception (24) pour le dispositif de protection (14), dans lequel cet appareil de réception (24) est agencé dans une paroi extérieure d'un seul des deux appareils, dans lequel le dispositif de protection (14) présente une ossature (16) et une gaine (18) qui sont configurées afin d'envelopper un espace creux s'étendant dans un sens longitudinal, par lequel un câble de charge (8) peut être guidé, dans lequel l'ossature (16) et la gaine (18) sont déformables dans le sens longitudinal, dans lequel une longueur du dispositif de protection (14) est à modifier et à adapter à une longueur du câble de charge (8) à guider à travers l'espace creux entre les deux appareils, **caractérisé en ce que** le dispositif de protection (14) présente un entraînement électrique et/ou hydraulique (32) et une barre de guidage (34) télescopique déployable, dans lequel l'entraînement (32) est agencé au niveau d'une première extrémité de l'ossature (16), dans lequel une première extrémité de la barre de guidage (34) est agencée au niveau de l'entraînement (32), dans lequel une seconde extrémité de la barre de guidage (34) est agencée au niveau d'une seconde extrémité de l'ossature (16), dans lequel l'entraînement électrique et/ou hydraulique (32) est configuré afin de rallonger ou de raccourcir la barre de guidage (34) et ainsi le dispositif de protection (14) selon les besoins et ainsi de les modifier, dans lequel une première extrémité du dispositif de protection (14) est agencée dans l'appareil de réception (24) de l'un des deux appareils, dans lequel le dispositif de protection (14) présente au moins un dispositif de fixation (20) qui est configuré afin de relier une seconde extrémité du dispositif de protection (14) à l'autre des deux appareils, dans lequel l'appareil de réception (24) n'est pas agencé.

2. Système selon la revendication 1, dans lequel au moins une section de l'ossature (16) est reliée à au moins une section de la gaine (18).

3. Système selon la revendication 1 ou 2, dans lequel l'ossature (16) est formée de métal ou de fil métallique spiralé et/ou de matière plastique ou de fil plastique spiralé et/ou dans lequel la gaine (18) est formée de matière plastique, de matériau textile, de Kevlar et/ou de métal.

4. Procédé de protection d'un câble de charge (8) électrique pour la liaison électrique de deux dispositifs lors d'un processus de charge avec un dispositif de protection (14), dans lequel le dispositif de protection (14) présente une ossature (16) et une gaine (18), avec lesquelles un espace creux pour le câble de charge (8) est enveloppé dans un sens longitudinal, dans lequel l'ossature (16) et la gaine (18) sont déformées dans le sens longitudinal, dans lequel une longueur du dispositif de protection (14) est modifiée et adaptée à une longueur du câble de charge (8) guidé par l'espace creux entre les deux appareils, dans lequel le dispositif de protection (14) présente un entraînement électrique et/ou hydraulique (32) et une barre de guidage (34) télescopique déployable, dans lequel l'entraînement (32) est agencé au niveau d'une première extrémité de l'ossature (16), dans lequel une première extrémité de la barre de guidage (34) est agencé au niveau de l'entraînement (32), dans lequel une seconde extrémité de la barre de guidage (34) est agencée au niveau d'une seconde extrémité de l'ossature (16), dans lequel la barre de guidage (34) et ainsi le dispositif de protection (14) sont rallongés ou raccourcis avec l'entraînement électrique et/ou hydraulique (32) selon les besoins et ainsi modifiés, **caractérisé en ce que** le procédé est réalisé lors d'un processus de charge pour lequel un véhicule en tant que premier appareil est alimenté en énergie électrique par le biais du câble de charge (8) par une station de charge (4) électrique en tant que second appareil, dans lequel les deux appareils sont reliés l'un à l'autre avant le processus de charge par le biais du câble de charge (8), dans lequel le dispositif de protection (14) est prolongé avec l'entraînement (32) à partir d'un état replié dans le sens longitudinal, déplié et tiré par le biais du câble de charge (8), dans lequel le dispositif de protection (14) est relié à au moins un des deux appareils, duquel le dispositif de protection (14) est séparé jusqu'à présent, dans lequel une première extrémité du dispositif de protection (14) est agencée dans un appareil de réception (24) d'un des deux appareils, dans lequel l'appareil de réception (24) présente une ouverture au niveau d'une paroi extérieure de l'appareil, dans lequel le dispositif de protection (14) est retiré de l'appareil de réception (24) avant le processus de charge avec l'entraînement (32) par l'ouverture et est rallongé dans le sens longitudinal, dans lequel une seconde extrémité du dispositif de protection (14) est reliée par le biais d'un dispositif de fixation (20) à l'autre des deux appareils, dans lequel le dispositif de fixation (20) est détaché de l'autre appareil après le processus de charge, dans lequel le dispositif de protection (14) est replié et agencé dans l'appareil de réception.
